# FASCICULE DE BREVET EUROPEEN

(11) **EP 3 140 178 B1**
(45) Date de publication et mention de la délivrance du brevet: **20.10.2021**
(21) Numéro de dépôt: 15723033.5
(22) Date de dépôt: 17.04.2015
(51) Int. Cl.: B62D 25/14, B62D 25/20

(54) **TABLIER AVANT POUR VEHICULE AUTOMOBILE**
FRONTSCHOTT FÜR EIN KRAFTFAHRZEUG
FRONT BULKHEAD FOR A MOTOR VEHICLE

(30) Priorité: 07.05.2014 FR 1454105
(43) Date de publication de la demande: 15.03.2017
(73) Titulaire: Renault S.A.S., 92100 Boulogne-Billancourt (FR)
(72) Inventeur: DELORD, Christian, 78000 Versailles (FR); HUE, Fabien, 78125 La Boissiere Ecole (FR)
(86) Numéro de dépôt international: PCT/FR2015/051056
(87) Numéro de publication internationale: WO 2015/170024

(56) Documents cités:
- WO-A1-99/57002
- WO-A1-2013/088896
- US-A1- 2004 183 339

## Description

L'invention concerne un tablier avant pour véhicule automobile dont le plancher de caisse est doté d'un tunnel. L'invention concerne plus particulièrement un tablier avant pour un véhicule dont le moteur est situé à l'arrière.

Le tablier est une cloison globalement plane et d'orientation verticale et transversale qui doit permettre d'assurer un confort et une sécurité maximum aux passagers du véhicule. On pourra se référer aux documents FR 2 803 813, EP 1 073 579 et EP 1 920 999 qui illustrent des exemples de tablier avant pour véhicule automobile.

Entre autres, le tablier réalise l'isolation phonique de l'habitacle. Des éléments amortisseurs, tels que des mousses sont par exemple collés sur le tablier pour absorber une partie importante des vibrations et ainsi diminuer le niveau sonore et les vibrations dans l'habitacle.

Une fonction importante du tablier est d'assurer la sécurité des passagers du véhicule, notamment lors d'un choc avant. Le tablier avant est en conséquence généralement conçu de manière à éviter qu'il y ait un contact direct entre la partie avant et l'habitacle du véhicule.

Le tablier avant a également pour fonction de permettre le passage d'éléments s'étendant à la fois dans l'habitacle et dans la partie avant du véhicule, tels que la colonne de direction, les pédales de commande du moteur et des freins du véhicule.

D'autres éléments s'étendent dans le plan longitudinal du véhicule et doivent donc généralement traverser l'habitacle et le tablier avant. C'est le cas par exemple pour la ligne d'échappement du moteur du véhicule. Les planchers de caisse des véhicules automobiles sont généralement dotés d'un tunnel s'étendant dans la direction longitudinale du véhicule dont la fonction est de protéger ces éléments et en particulier la ligne d'échappement du moteur.

Par ailleurs, les roues avant de certains véhicules ne sont pas toujours totalement situées en avant du tablier avant.

Ainsi, il apparaît dans les documents FR 2 803 813, EP 1 073 579 et EP 1 920 999 que dans ces tabliers avant sont prévus :
- des ouvertures pour les câbles de pédales d'accélération, d'embrayage et de freinage et pour la colonne de direction,
- des évidements pour les roues avant du véhicule, et
- une découpe pour le tunnel du plancher de caisse.

La réalisation d'un tablier avant se fait généralement par emboutissage. Un flanc de tôle rectangulaire est embouti de manière à pratiquer les ouvertures, les évidements et la découpe. L'emboutissage permet en outre d'adapter la forme du tablier à l'architecture du véhicule automobile. Le flanc de tôle rectangulaire est bien entendu de masse supérieure à celle de la pièce finie. Une partie du flanc constitue la pièce finie, tandis que le reste constitue les chutes, c'est-à-dire de la matière non utilisée.

Lors de la réalisation d'un tablier, l'engagement matière représente le rapport entre la masse de la pièce finie et la masse du flanc utilisé. Lors de la fabrication, on a intérêt à perdre le moins possible de matière pour réaliser la pièce. On cherche donc généralement à maximiser l'engagement matière. Les engagements matières généralement atteints sont de l'ordre de 55%.

On connaît également le document US 2004/183339 A1 décrivant un tablier avant pour véhicule automobile dont le plancher de caisse est doté d'un tunnel traversant le tablier, ce qui n'est pas nécessairement adapté par exemple à un véhicule pourvu d'un moteur à l'arrière. Le document WO 2013/088896 A1 décrit également une structure de véhicule automobile comprenant un tablier avant réalisé par emboutissage d'une pièce de tôle ainsi qu'un plancher doté d'un tunnel central.

Au vu de ce qui précède, le but de l'invention est de proposer un tablier conçu de manière à pouvoir être réalisé par emboutissage avec un engagement matière important, et adapté à un véhicule pourvu d'un moteur à l'arrière.

Selon un premier aspect, une structure de véhicule automobile comprenant un tablier avant et un plancher de caisse doté d'un tunnel, le tablier comprenant un bord inférieur, un bord supérieur et deux côtés latéraux. Les bords inférieur et supérieur sont continus et sensiblement parallèles, le bord inférieur étant dénué de découpe au niveau de la jonction avec le tunnel de plancher de caisse du véhicule, les côtés latéraux présentant des portions pleines intégrant la forme des passages de roues.

Un tel tablier formé d'une seule pièce est conçu de manière à utiliser la matière du brut de fabrication de manière optimisée. Dans certains modes de réalisation, une telle pièce peut être réalisée par emboutissage avec un engagement matière supérieur à 69%. Un meilleur engagement matière présente des avantages au niveau du prix de revient de fabrication de la pièce. Par ailleurs, le tablier présente une structure plus résistante et présente un moindre risque de corrosion.

Selon l'invention, le tablier avant comprend une première surface sensiblement verticale et disposée vers l'avant et une deuxième surface adjacente et inclinée vers l'arrière lorsque le tablier est monté dans le véhicule, la deuxième surface présentant dans sa partie centrale un évidement formant un corps creux fermé adapté pour loger l'extrémité avant du tunnel d'un plancher de caisse du véhicule. Le tablier est réalisé par emboutissage à partie d'un flanc de tôle.

On peut également prévoir que les portions pleines intégrant la forme des passages de roues comprennent une surface de jonction de forme sensiblement conique et incurvée.

Avantageusement, la première surface est adaptée au montage des pédaliers et de la colonne de direction. Dans une première variante, le tablier comprend un ajourage pratiqué dans la première surface prévu pour le montage d'un renfort séparé. Dans une seconde variante, la première surface présente une cavité borgne dans laquelle sont pratiqués quatre trous taraudés.

Selon un deuxième aspect, un véhicule automobile comprend un plancher de caisse doté d'un tunnel s'étendant dans la direction longitudinale du véhicule et un tablier avant tel que défini précédemment.

Avantageusement, un joint en mastic est disposé le long des bords inférieur et supérieur et des côtés latéraux du tablier avant.

L'absence de découpe dans la seconde surface du tablier avant au niveau du tunnel est alors avantageuse car le tablier présente moins de longueur à mastiquer.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente schématiquement un tablier avant selon un premier mode de réalisation,
- la figure 2 représente schématiquement le tablier avant de la figure 1 disposé sur le plancher de caisse d'un véhicule automobile, et
- la figure 3 représente un tablier avant selon un deuxième mode de réalisation.

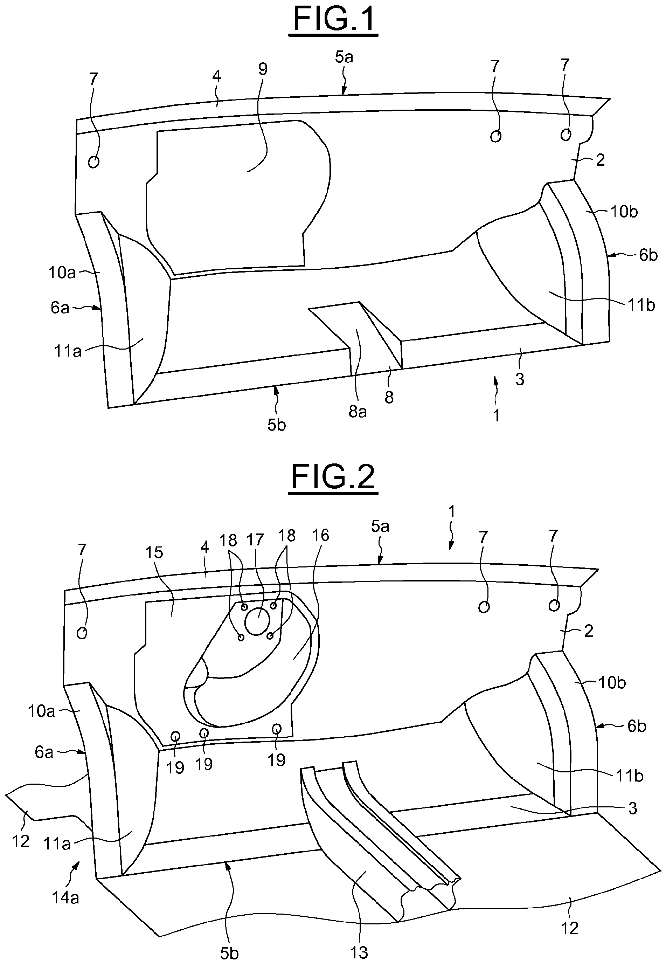

On a représenté sur la figure 1 une vue schématique en perspective d'un tablier avant 1 selon un premier mode de réalisation.

Le tablier avant 1 est constitué d'une seule pièce en tôle déformée, par exemple réalisée par emboutissage à partir d'une tôle plane. Le tablier avant 1 comprend donc une première surface 2 sensiblement plane avec des déformations locales. La première surface 2 est sensiblement verticale et disposée vers l'avant lorsque le tablier 1 est monté dans le véhicule. Le tablier 1 comprend une seconde surface 3 adjacente et inclinée par rapport à la première surface 2 vers l'arrière lorsque le tablier 1 est monté dans le véhicule. Un rebord supérieur 4 est adjacent à la deuxième surface 2.

Le tablier avant 1 comprend un bord supérieur 5a, appartenant au rebord 4 et un bord inférieur 5b, appartenant à la seconde surface 3. On désigne aussi deux côtés : un côté gauche 6a et un côté droit 6b (par rapport à la figure 1). Les bords supérieur 5a et inférieur 5b sont continus et sensiblement parallèles l'un par rapport à l'autre. Il en résulte que le tablier 1 a globalement une forme rectangulaire.

Le tablier avant 1 est destiné à être incorporé dans la structure d'un véhicule automobile composée généralement d'un plancher de caisse, d'un support de capot, d'une traverse avant et de deux joues latérales de carrosserie. Le bord supérieur 5a est destiné à être maintenu contre le support de capot (non représenté). Le bord inférieur 5b est destiné à être en contact avec le plancher de caisse 12 (représenté en figure 2). Les côtés gauche et droit 6a et 6b sont respectivement destinés à être disposés au contact des joues latérales de carrosserie gauche et droite (non représentées). Trois trous identiques 7 sont pratiqués sur la première surface 2, afin de permettre la fixation de la surface 2 à la traverse du véhicule (non représentée), au moyen de boulons non représentés. On pourra en outre pratiquer des soudures au niveau des bords 5a et 5b et des côtés 6a et 6b. Ainsi, au moyen des bords 5a et 5b, des côtés 6a et 6b et des trous 7, le tablier avant 1 est conçu pour être incorporé dans la structure du véhicule.

De façon classique, le plancher de caisse 12 du véhicule est muni d'un tunnel 13, s'étendant généralement sur toute la longueur du véhicule. Le tunnel 13 de plancher de caisse 12 est donc généralement disposé au contact, ou traversant le tablier avant 1 du véhicule, définissant une zone de jonction du tablier avec le tunnel. Dans l'exemple illustré, le moteur étant à l'arrière, il n'est pas nécessaire que le tunnel 13 traverse le tablier 1. La zone de jonction fait partie de la deuxième surface 3 qui présente un évidement formant un corps creux fermé 8 disposé sur la partie centrale de la seconde surface 3, et destiné à loger l'extrémité avant du tunnel 13 du plancher de caisse 12 du véhicule. A cet effet, l'évidement 8 est de préférence délimité par une portion de surface 8a d'inclinaison supérieure à celle de la deuxième surface 3 afin de recevoir l'extrémité effilée du tunnel 13.

Le tablier avant 1 comprend par ailleurs un ajourage 9 disposé sur la première surface 2. L'ajourage 9 est prévu pour le montage d'un renfort séparé (visible en figure 2) intégrant par exemple des moyens pour faire traverser la colonne de direction et les pédaliers de commande du véhicule.

Le tablier avant 1 comprend sur son côté gauche 6a (par rapport à la figure 1) une portion pleine intégrant un passage de roue gauche 10a comprenant une surface de jonction 11a de forme sensiblement conique ou incurvée. Ces déformations locales de la portion pleine sont aisément réalisables par emboutissage. Le tablier avant 1 comprend par ailleurs sur son côté droit 6b, de façon symétrique, un passage de roue droite 10b comprenant une surface de jonction 11b sensiblement conique ou incurvée.

On a représenté sur la figure 2 le tablier avant 1 disposé sur le plancher de caisse 12 du véhicule automobile. Dans cet exemple, le moteur du véhicule automobile est situé à l'arrière de celui-ci.

Le plancher de caisse 12 est une surface plane sur laquelle est monté le tunnel 13, et dans laquelle sont pratiquées des ouvertures de roues 14a et 14b (seule l'ouverture de roue gauche 14a étant visible sur la figure 2). Des moyens de fixation (non représentés) permettent de rendre solidaires le plancher de caisse 12 avec le tablier avant 1, au niveau du bord inférieur 5b de ce dernier. Le tunnel 13 ne traverse pas le tablier avant 1 et vient en butée contre le corps creux 8, ce qui renforce l'assemblage du plancher 12 avec le tablier 1.

Dans cet exemple, le tablier avant 1 comprend un renfort 15 monté dans l'ajourage 9. Le renfort 15 comprend une cavité 16 et un trou 17 prévus pour le montage de la colonne de direction du véhicule (non représentée). Quatre trous taraudés 18 identiques sont prévus pour la fixation de la colonne de direction du véhicule au renfort 15 du tablier avant 1, au niveau de la cavité 16. Le renfort 15 comprend enfin trois trous 19 prévus pour les câbles des pédales de commande du véhicule, par exemple les câbles de la pédale d'accélérateur, de la pédale de freinage et de la pédale d'embrayage.

Dans cet exemple, l'ajourage 9 est situé en partie centrale gauche du tablier 1 pour permettre de mettre en place le poste du conducteur sur le côté gauche du véhicule. Bien évidemment, on peut envisager, sans sortir du cadre de l'invention, un tablier présentant les mêmes caractéristiques avec un ajourage situé en partie centrale droite prévu pour le montage d'un renfort symétrique au renfort 15.

De cette manière, le tablier avant 1 est une pièce de forme globalement rectangulaire avec des déformations locales. Il peut être réalisé par emboutissage à partir d'un flanc de tôle rectangulaire. L'absence de découpe pour le tunnel et l'intégration des passages de roue dans une portion pleine permettent d'améliorer l'engagement matière. On estime qu'une telle forme de tablier avant permet d'atteindre un engagement matière supérieur à 69%, très supérieur à l'engagement matière moyen d'un tablier avant, estimé à environ 55%.

Dans cet exemple, le tablier a sensiblement une masse de 5,73kg. Pour sa réalisation par emboutissage, le flanc de tôle utilisé a une masse de 8,23kg, soit un engagement matière de 69,5%. Pour réaliser par emboutissage le même tablier avec des caractéristiques classiques et avec un engagement matière de 55%, tel que dans les documents FR 2 803 813, EP 1 073 579 et EP 1 920 999, il est nécessaire d'utiliser un flanc de tôle de 10,4kg, soit presque 2,2kg de tôle supplémentaire.

Une telle architecture permet donc de réduire le prix de revient de fabrication du tablier, d'améliorer sa structure et sa résistance à la corrosion.

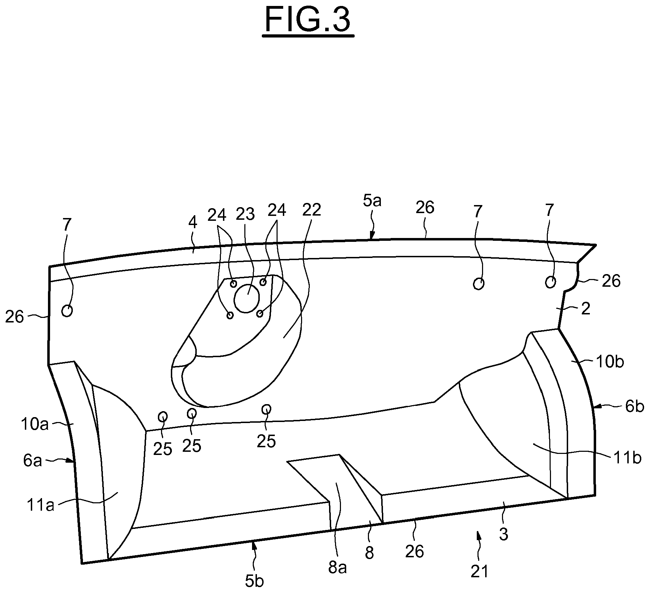

On a représenté en figure 3 un tablier 21 selon un deuxième mode de réalisation. Dans cette figure, les éléments identiques ont les mêmes références que dans les figures 1 et 2.

Le tablier 21 se distingue du tablier 1 de la figure 1 par l'absence de l'ajourage 9 en partie centrale gauche de la surface 2. La partie centrale gauche est elle-même adaptée au montage de la colonne de direction et des pédaliers de commande du véhicule. En effet, une cavité borgne 22 est pratiquée dans la surface 2, comprenant un trou 23 et quatre trous taraudés identiques 24. Ces éléments ont respectivement la même fonction que la cavité 16, le trou 17 et les trous taraudés 18 du renfort 15 de la figure 2. Le tablier 21 comprend enfin sur sa surface 2 trois trous 25, dont la fonction est la même que celle des trois trous 19 du renfort 15.

Sur la figure 3, on a en outre représenté un joint en mastic 26 disposé sur la totalité du pourtour extérieur du tablier avant 21, à savoir sur les côtés 5a, 5b, 6a et 6b. Celui-ci permet à la fois de renforcer l'étanchéité du tablier 1 et d'empêcher la transmission de vibrations d'une pièce à l'autre, par exemple du plancher de caisse au tablier avant du véhicule. Bien entendu, un joint similaire peut être prévu autour du tablier avant 1 des figures 1 et 2.

On note que l'absence de découpe sur le tablier avant de l'invention, au niveau du tunnel, diminue la longueur du pourtour du tablier avant, et donc diminue la longueur du joint en mastic. Il en résulte des économies de matière.

Par ailleurs, comme indiqué précédemment, le tablier peut être réalisé par emboutissage à partir d'un flanc de tôle rectangulaire. L'absence de découpe pour le tunnel et l'intégration des passages de roue dans une portion pleine permettent de réduire le prix de revient de fabrication du tablier et d'améliorer sa structure et sa résistance à la corrosion.

## Revendications

1. Structure de véhicule automobile comprenant un tablier avant (1, 21) et un plancher de caisse (12) est doté d'un tunnel (13), le tablier (1, 21) comprenant un bord inférieur (5b), un bord supérieur (5a) et deux côtés latéraux (6a, 6b présentant des portions pleines intégrant la forme des passages de roues (10a, 10b), les bords inférieur (5b) et supérieur (5a) étant continus et sensiblement parallèles, **caractérisé en ce que** le tunnel (13) de plancher de caisse (12) est disposé au contact non traversant et sans découpe du tablier (1, 21) et définit avec celui-ci une zone de jonction (8), faisant partie d'une seconde surface (3) inclinée du tablier (1, 21) et disposée à l'arrière d'une première surface (2) sensiblement verticale du tablier (1) lorsque le tablier (1, 21) est monté dans le véhicule, la deuxième surface (3) présentant dans sa partie centrale un évidement formant un corps creux fermé adapté pour loger l'extrémité avant du tunnel (13), le tablier étant réalisé par emboutissage à partie d'un flanc de tôle.

2. Structure selon la revendication 1, **caractérisé en ce que** les portions pleines intégrant la forme des passages de roues (10a, 10b) comprennent une surface de jonction (11a, 11b) de forme sensiblement conique et incurvée.

3. Structure selon la revendication 2, **caractérisé en ce que** la première surface (2) est adaptée au montage des pédaliers et de la colonne de direction.

4. Structure selon l'une quelconque des revendications 1 à 3, **caractérisé en ce qu'**il comprend un ajourage (9) pratiqué dans la première surface (2) prévu pour le montage d'un renfort (15) séparé.

5. Structure selon l'une quelconque des revendications 1 à 3, **caractérisé en ce que** la première surface (2) présente une cavité borgne (22) dans laquelle sont pratiqués quatre trous taraudés (24).

6. Véhicule automobile comprenant une structure selon l'une quelconque des revendications 1 à 5.

7. Véhicule selon la revendication 6, **caractérisé en ce qu'**un joint en mastic (26) est disposé le long des bords inférieur (5b) et supérieur (5a) et des côtés latéraux (6a, 6b) du tablier avant (1, 21).

## Patentansprüche

1. Kraftfahrzeugstruktur, umfassend eine Frontschürze (1, 21) und einen Karosserieboden (12), der mit einem Tunnel (13) versehen ist, wobei die Schürze (1, 21) eine untere Kante (5b), eine obere Kante (5a) und zwei Seitenkanten (6a, 6b) umfasst, die massive Abschnitte aufweisen, die die Form der Radkästen (10a, 10b) integrieren, wobei die untere (5b) und die obere Kante (5a) durchgehend und im Wesentlichen parallel sind, **dadurch gekennzeichnet, dass** der Tunnel (13) des Karosseriebodens (12) in nicht durchgehendem Kontakt mit der Schürze (1, 21) und ohne Ausschnitt derselben angeordnet ist und mit dieser einen Verbindungsbereich (8) definiert, der Teil einer zweiten geneigten Fläche (3) der Schürze (1, 21) ist und hinter einer im Wesentlichen vertikalen ersten Fläche (2) der Schürze (1) angeordnet ist, wenn die Schürze (1, 21) im Fahrzeug montiert ist, wobei die zweite Fläche (3) in ihrem mittleren Teil eine Aussparung aufweist, die einen geschlossenen Hohlkörper bildet, der zur Aufnahme des vorderen Endes des Tunnels (13) geeignet ist, wobei die Schürze durch Tiefziehen aus einem Blechstück gefertigt.

2. Struktur nach Anspruch 1, **dadurch gekennzeichnet, dass** die massiven Abschnitte, die die Form der Radkästen (10a, 10b) integrieren, eine im Wesentlichen konische und gekrümmte Verbindungsfläche (11a, 11b) umfassen.

3. Struktur nach Anspruch 2, **dadurch gekennzeichnet, dass** die erste Fläche (2) zur Montage der Pedale und der Lenksäule geeignet ist.

4. Struktur nach einem der Ansprüche 1 bis 3, **dadurch gekennzeichnet, dass** sie eine Aussparung (9) umfasst, die in der ersten Fläche (2) ausgeführt und zur Montage einer separaten Verstärkung (15) vorgesehen ist.

5. Struktur nach einem der Ansprüche 1 bis 3, **dadurch gekennzeichnet, dass** die erste Fläche (2) einen Blindhohlraum (22) aufweist, in dem vier Gewindelöcher (24) ausgeführt sind.

6. Kraftfahrzeug, umfassend eine Struktur nach einem der Ansprüche 1 bis 5.

7. Fahrzeug nach Anspruch 6, **dadurch gekennzeichnet, dass** entlang der unteren (5b) und der oberen Kante (5a) sowie der Seitenkanten (6a, 6b) der Frontschürze (1, 21) eine Spachtelverbindung (26) angeordnet ist.

## Claims

1. Structure for a motor vehicle, comprising a front bulkhead (1, 21) and a bodyshell floor (12) fitted with a tunnel (13), the bulkhead (1, 21) comprising a lower edge (5b), an upper edge (5a) and two lateral sides (6a, 6b) having solid portions incorporating the shape of wheel arches (10a, 10b), the lower (5b) and upper (5a) edges being continuous and substantially parallel, **characterized in that** the tunnel (13) of the bodyshell floor (12) is placed in contact with, but not passing through and with no cutout in, the bulkhead (1, 21) and defines therewith a junction zone (8), forming part of an inclined second surface (3) of the bulkhead (1, 21), and arranged to the rear of a substantially vertical first surface (2) of the bulkhead (1), when the bulkhead (1, 21) is mounted in the vehicle, the second surface (3) in its central part having a recess forming a closed hollow body, designed to house the front end of the tunnel (13), the bulkhead being produced as a pressing using deep-drawing of a metal sheet.

2. Structure according to Claim 1, **characterized in that** the solid portions incorporating the shape of the wheel arches (10a, 10b) comprise a junction surface (11a, 11b) of substantially conical and curved form.

3. Structure according to Claim 2, **characterized in that** the first surface (2) is designed for mounting of the pedals and the steering column.

4. Structure according to any of Claims 1 to 3, **characterized in that** it comprises an opening (9) made in the first surface (2) and intended for the mounting of a separate reinforcement (15).

5. Structure according to any of Claims 1 to 3, **characterized in that** the first surface (2) has a blind cavity (22) in which four threaded holes (24) are made.

6. Motor vehicle comprising a structure according to any one of Claims 1 to 5.

7. Vehicle according to Claim 6, **characterized in that** a mastic seal (26) is arranged along the lower (5b) and upper (5a) edges and the lateral sides (6a, 6b) of the front bulkhead (1, 21).
